# EUROPEAN PATENT APPLICATION

(11) **EP 2 093 540 A2**
(43) Date of publication of application: **26.08.2009**
(21) Application number: 09000011.8
(22) Date of filing: 02.01.2009
(51) Int. Cl.: G01C 21/36

(54) **Integrated satellite navigation system, navigation interface, and method for navigation information display**

(30) Priority: 22.02.2008 TW 97106222
(71) Applicant: ASUSTeK Computer Inc., Peitou, Taipei City (TW)
(72) Inventor: Yeh, Shu Ming, Peitou Taipei-City (TW); Cheng, Kuang-Ting, Peitou Taipei-City (TW)
(74) Representative: Weber, Joachim

(57) **Abstract**

An integrated satellite navigation system is disclosed. The system comprises a navigation satellite device and a head up display. The navigation satellite device generates navigation information. The head up display retrieves the navigation information from the navigation satellite device and projects a navigation interface using a projection device thereof to display the navigation.information.

## Description

### CROSS REFERENCE TO RELATED APPLICATIONS

This Application claims priority of Taiwan Patent Application No. 97106222, filed on February 22, 2008, the entirety of which is incorporated by reference herein.

### BACKGROUND OF THE INVENTION

### Field of the Invention

The invention relates to satellite navigation devices, and more particularly to an integrated satellite navigation system and a method for navigation information display.

### Description of the Related Art

Current satellite navigation devices, such as portable navigation devices (PND), are installed on a central unit of an automobile or integrated in a dashboard thereof. Since a satellite navigation device cannot be directly installed permanently in front of the driver due to safety concerns while driving, the driver must turn or bend his head to view a satellite navigation device screen installed on the central unit or integrated on the dashboard.

However, when the driver bends his head or changes his/her visual angle (i.e. changes focus length) without bending his head to view the navigation information, time not spent on viewing road conditions may amount to at least 1∼2 seconds, causing the car at normal speeds to move by about 27∼54 meters, thus, critically affecting driving safety.

Thus, an integrated satellite navigation system is desirable, reflecting the navigation information on a windscreen for safe and rapid navigation information display.

### BRIEF SUMMARY OF THE INVENTION

Integrated satellite navigation systems are provided. An exemplary embodiment of an integrated satellite navigation system comprises a navigation satellite device and a head up display. The navigation satellite device generates navigation information. The head up display retrieves the navigation information from the navigation satellite device. The head up display further comprises a projection device. The projection device projects a navigation interface to display the navigation information.

Navigation interfaces are provided. An exemplary embodiment of a navigation interface comprises a circle, eight directional straight lines divergently dispersed from a center of the circle, and an U type shape intersecting the straight lines and surrounding the circle.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

Fig. 1 is a schematic view of an integrated satellite navigation system of the present invention;

Fig. 2 is a schematic view of a navigation interface of the present invention;

Fig. 3A is a schematic view of a navigation interface on a projection device of the present invention;

Fig. 3B is a schematic view of a navigation interface projected on a windscreen of the present invention;

Figs. 4A∼4G are schematic views of the navigation interface displaying various navigation information of the present invention; and

Fig. 5 is a flowchart of a method for navigation information display of the present invention.

### DETAILED DESCRIPTION OF THE INVENTION

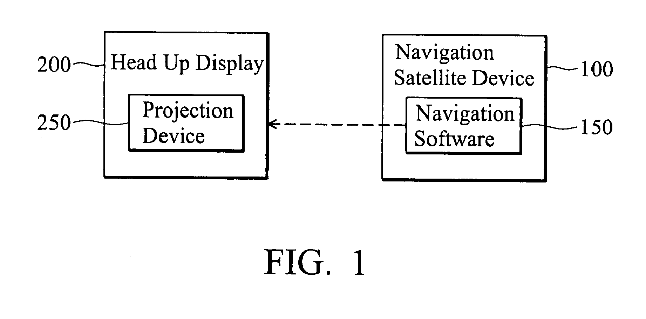

Several exemplary embodiments of the invention are described with reference to Figs. 1 through 5, which generally relate to navigation information display. It is to be understood that the following disclosure provides various different embodiments as examples for implementing different features of the invention. Specific examples of components and arrangements are described in the following to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various described embodiments and/or configurations.

The invention discloses an integrated satellite navigation system and a method for navigation information display.

An embodiment of the integrated satellite navigation system projects navigation information on a windscreen using a head up display (HUD) so the driver does not have to bend his head or change his visual angel to view the navigation information. Thus, reducing the time not spent by drivers on viewing road conditions.

Fig. 1 is a schematic view of an integrated satellite navigation system of the present invention.

An embodiment of the integrated satellite navigation system comprises a navigation satellite device 100 and a head up display 200. The navigation satellite device 100 further comprises navigation software 150. The head up display 200 further comprises a projection device 250.

When the integrated satellite navigation system is activated, the navigation satellite device 100 receives geographic information. The navigation software 150 processes the geographic information and generates navigation information according to a user's navigation settings and transmits the navigation information to the head up display 200 in a wireless or wired manner. The head up display 200 retrieves, from the navigation satellite device, and processes the navigation information, displays the processed navigation information using a navigation interface provided by the head up display 200 and projects the navigation interface to display the navigation information on a windscreen (not shown) using the projection device 250.

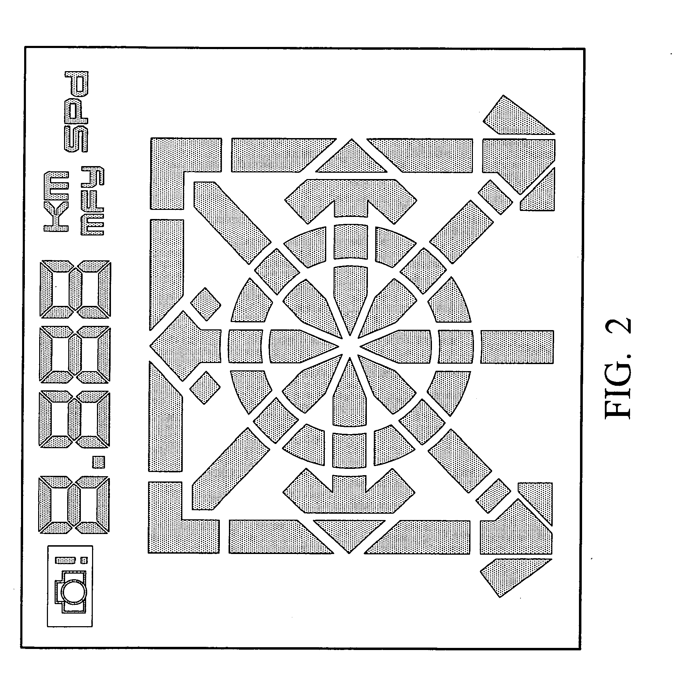

Fig. 2 is a schematic view of a navigation interface of the present invention. The navigation interface displays navigation information of various road conditions (i.e. driving paths), comprising, for example, turn right, turn left, turn around, roundabout, down cloverleaf, go straight, and so on, and further displays speed per hour and provides speedtrap information. The navigation interface is composed of a circle, eight directional straight lines divergently dispersed from a center of the circle, a rectangle or an U type shape intersecting the straight lines and surrounding the circle, a speed alarm lamp, and number or text lamps for displaying speed per hour, distances, or distance units.

When a car is driving, the number lamps show the current car speed and one of the text lamp (SPd) is turned on. When a speedtrap is being approached, the speed alarm lamp is turned on. When navigation information is retrieved, the navigation interface displays a forward direction and one of the text lamps is turned on to show the current distance unit as kilometer (Km), mile (m), feet (F) or yard (y).

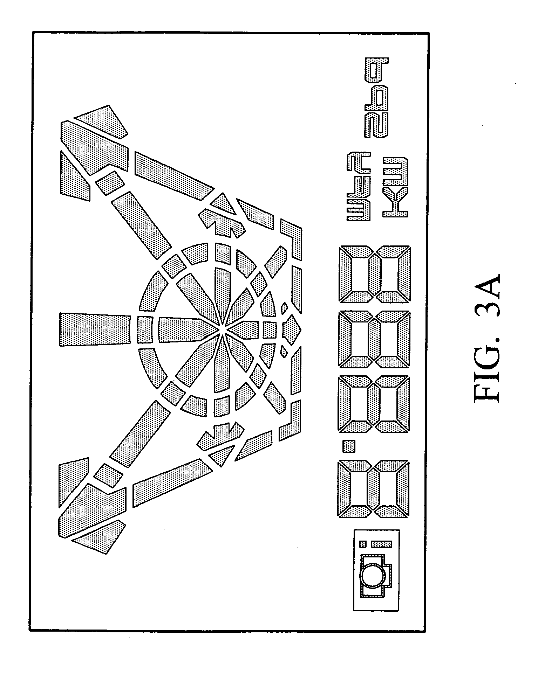

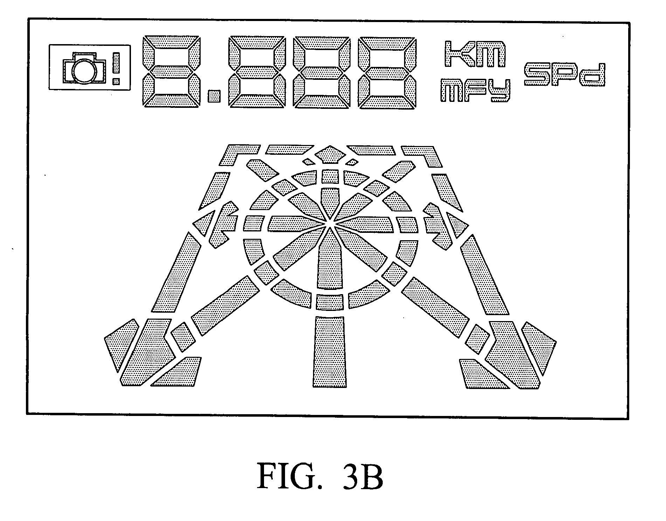

Fig. 3A is a schematic view of a navigation interface on the projection device 250 of the present invention. The head up display 200 is installed on a dashboard in front of the driver. When the navigation interface is projected on a windscreen to be viewed, the navigation information is displayed in inverted left and right directions, as shown in Fig. 3B.

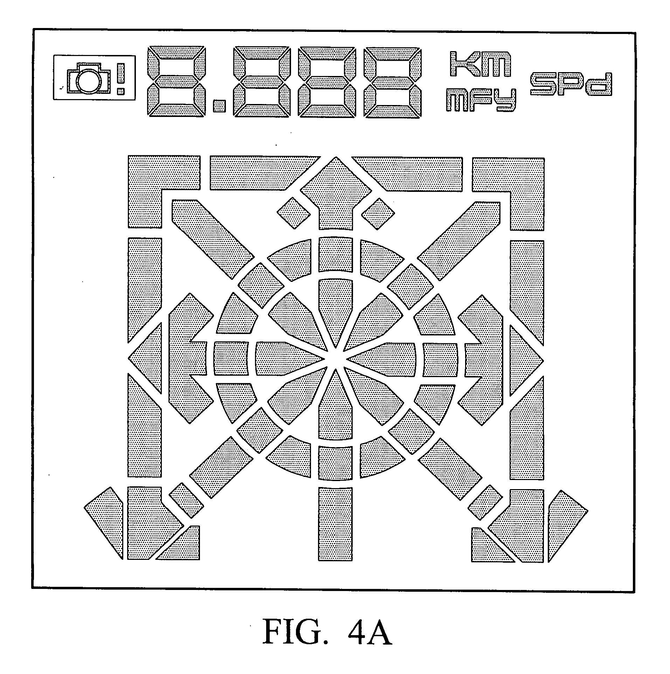

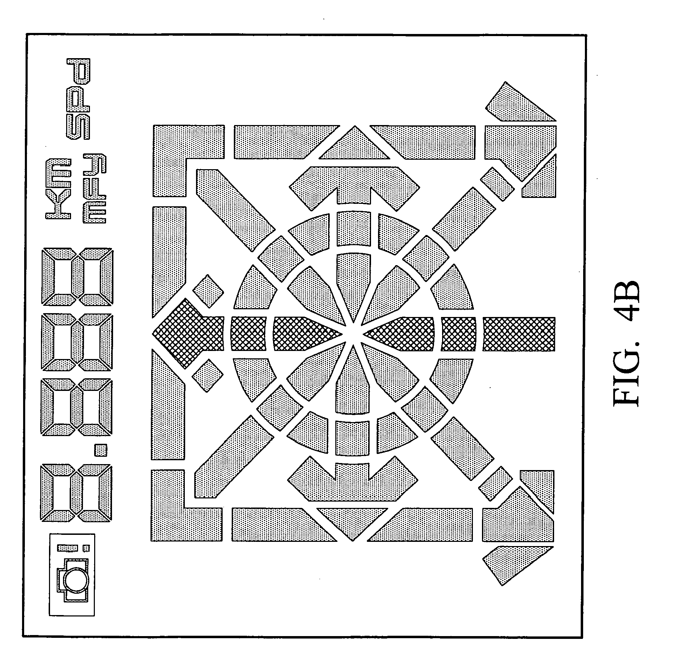

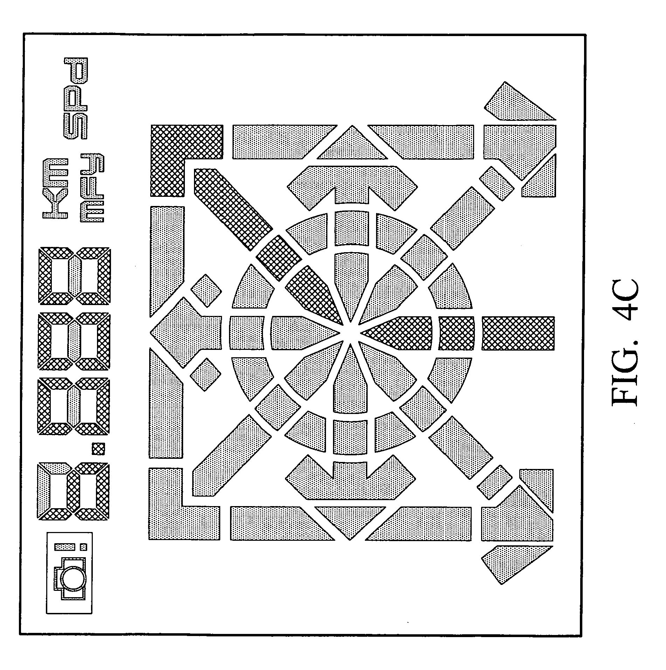

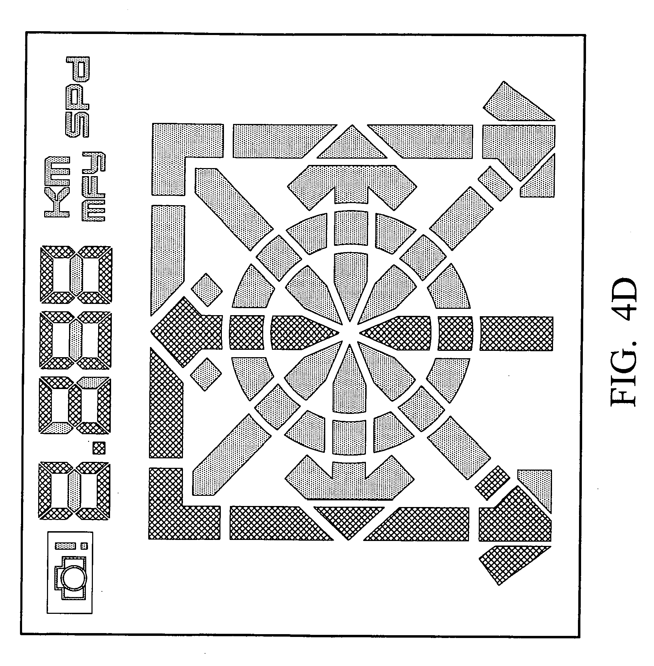

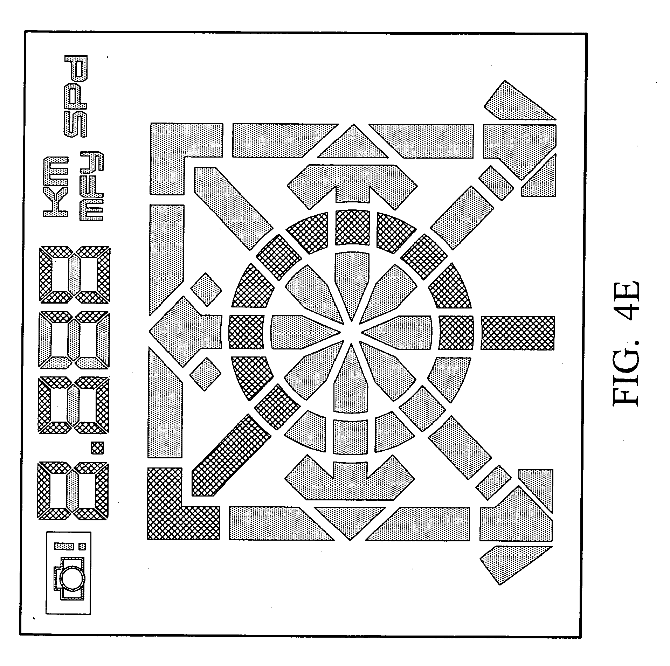

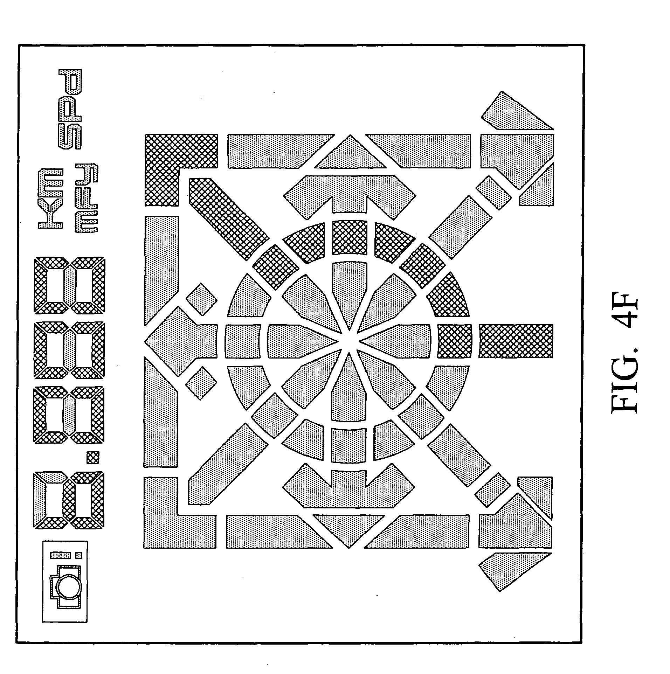

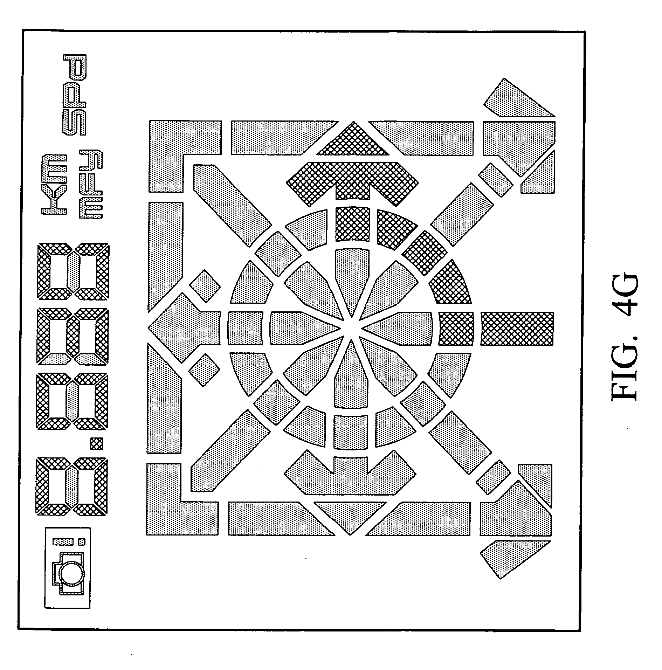

Figs. 4A∼4G are schematic views of the navigation interface displaying various navigation information of the present invention. Figs. 4A∼4G respectively display an initial state, go straight, turn around, turn left at the roundabout, and turn right at the roundabout, which are only examples and not to limit the present invention. It is noted that Figs. 4A∼4G only show navigation information of driving directions, speed alarms and navigation information of distances and car speed are not further described.

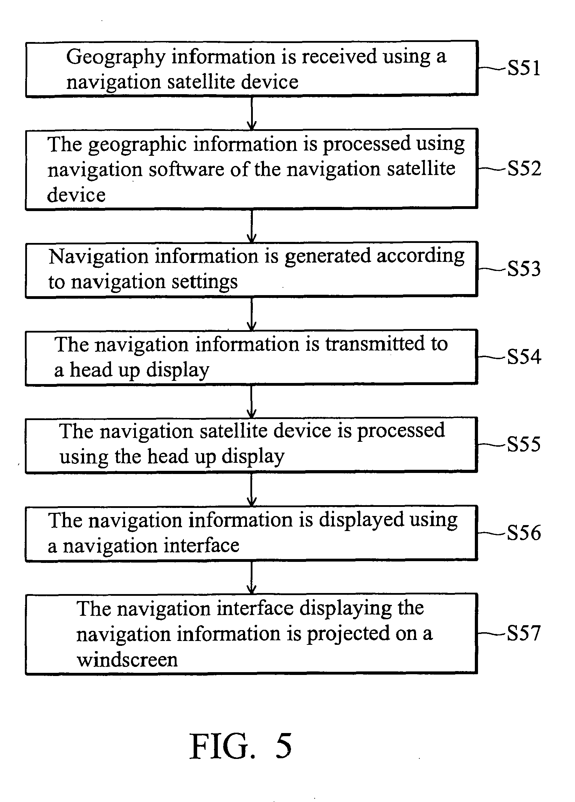

Fig. 5 is a flowchart of a method for navigation information display of the present invention.

When an integrated satellite navigation system is activated, geographic information is received using a navigation satellite device (step S51). The geographic information is processed using navigation software of the navigation satellite device (step S52). Navigation information is generated according to navigation settings (step S53) and transmitted to a head up display in a wireless or wired manner (step S54). The navigation satellite device is processed using the head up display (step S55), the processed navigation information is displayed using a navigation interface provided by the head up display (step S56), and the navigation interface displaying the navigation information is projected on a windscreen using a projection device of the head up display (step S57).

Methods and systems of the present disclosure, or certain aspects or portions of embodiments thereof, may take the form of program code (i.e., instructions) embodied in media, such as floppy diskettes, CD-ROMS, hard drives, firmware, or any other machine-readable storage medium, wherein, when the program code is loaded into and executed by a machine, such as a computer, the machine becomes an apparatus for practicing embodiments of the disclosure. The methods and apparatus of the present disclosure may also be embodied in the form of program code transmitted over some transmission medium, such as electrical wiring or cabling, through fiber optics, or via any other form of transmission, wherein, when the program code is received and loaded into and executed by a machine, such as a computer, the machine becomes an apparatus for practicing and embodiment of the disclosure. When implemented on a general-purpose processor, the program code combines with the processor to provide a unique apparatus that operates analogously to specific logic circuits.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An integrated satellite navigation system, comprising:
a navigation satellite device, generating navigation information; and
a head up display, retrieving the navigation information from the navigation satellite device, further comprising:
a projection device, projecting a navigation interface to display the navigation information.

2. The integrated satellite navigation system as claimed in claim 1, wherein the head up display retrieves the navigation information in a wireless or wired manner.

3. The integrated satellite navigation system as claimed in claim 1, wherein the navigation interface displays driving paths, car speeds, distances or speed alarms.

4. The integrated satellite navigation system as claimed in claim 1, wherein the navigation interface displays the navigation information in inverted left and right directions and projects the navigation information on a windscreen.

5. A method for displaying navigation information, comprising:
generating navigation information using a navigation satellite device;
transmitting the navigation information to a head up display; and
projecting a navigation interface using the head up display to display the navigation information.

6. The method for displaying navigation information as claimed in claim 5, wherein the head up display retrieves the navigation information in a wireless or wired manner from the navigation satellite device.

7. The method for displaying navigation information as claimed in claim 5, wherein the navigation interface displays driving paths, car speeds, distances or speed alarms.

8. The method for displaying navigation information as claimed in claim 5, wherein the navigation interface displays the navigation information in inverted left and right directions and projects the navigation information on a windscreen.

9. A navigation interface, comprising:
a circle;
eight directional straight lines, divergently dispersed from a center of the circle; and
an U type shape, intersecting the straight lines and surrounding the circle.

10. The navigation interface as claimed in claim 9, further comprising at least one number or text lamp for displaying speed per hour, distances, or distance units.

11. The navigation interface as claimed in claim 9, wherein the navigation interface displays different driving paths.

12. The navigation interface as claimed in claim 9, further comprising a number lamp for displaying current car speed.

13. The navigation interface as claimed in claim 9, further comprising a speed alarm.
